# EUROPÄISCHE PATENTSCHRIFT

(11) **EP 2 651 126 B1**
(45) Veröffentlichungstag und Bekanntmachung des Hinweises auf die Patenterteilung: **20.04.2016**
(21) Anmeldenummer: 12167417.0
(22) Anmeldetag: 10.05.2012
(51) Int. Cl.: H04N 7/18, H04M 11/02, H04N 7/10

(54) **Verfahren zum Betreiben einer Videomailbox mit einem Türkommunikationssystem**
Method for operating a video mailbox with a door communication system
Procédé de mis en oeuvre d'un répondeur vidéo pour un système d'interphone portier

(30) Priorität: 13.04.2012 DE 102012103202
(43) Veröffentlichungstag der Anmeldung: 16.10.2013
(73) Patentinhaber: GIRA GIERSIEPEN GmbH & Co. KG, 42477 Radevormwald (DE)
(72) Erfinder: Steinmetzler, Andreas, 51709 Marienheide (DE)
(74) Vertreter: Patentanwälte Dr. Solf & Zapf

(56) Entgegenhaltungen:
- DE-A1-102010 014 471
- DE-U1-202006 005 191
- US-A- 6 072 861
- US-A1- 2002 118 283
- US-A1- 2011 025 852

## Beschreibung

Die Erfindung richtet sich auf ein Verfahren zum Betreiben einer Videomailbox in einem Türkommunikationssystem, umfassend mindestens eine Türstation, eine Wohnungsstation und eine Videomailboxeinheit, und auf eine Videomailboxeinheit und ein Türkommunikationssystem zur Durchführung eines derartigen Verfahrens.

Derartige Videomailboxeinheiten erlauben das Speichern und Abspielen von Audio/Video(A/V)-Nachrichten mittels Türstationen und Wohnungsstationen, die über einen Türkommunikationssystem(TKS)-Bus, insbesondere einen Zweidraht-Bus, miteinander verbunden sind.

Herkömmliche, bereits seit vielen Jahren installierte Türkommunikationssysteme und die dazugehörigen Türstationen und Wohnungsstationen sind für derartige Funktionen nicht ausgelegt. Insbesondere sind die Wohnungsstationen nur mit einer sehr eingeschränkten Anzahl von Eingabetasten ausgestattet, um sie möglichst kostengünstig herstellen zu können. Zudem sind derartige Türkommunikationssysteme in den Bus-Signalisierungsarten eingeschränkt, so dass es in der Regel nur eine Türruf-Signalisierung für eine Kommunikation von Türstation zu einer Wohnungsstation, eine Internruf-Signalisierung zur Kommunikation von einer Wohnungsstation zu einer anderen Wohnungsstation und eine Schalt-Signalisierung zum Beispiel zum Einschalten einer Beleuchtung, zur Verfügung steht. Dabei ist die Bus-Signalisierung derart ausgelegt, dass eine A/V-Kommunikation nur zwischen Türstation und Wohnungsstation möglich ist. Als interne Kommunikationsmöglichkeit ist lediglich eine Audio-Kommunikation zwischen zwei Wohnungsstationen vorgesehen. Herkömmliche Türstationen und Wohnungsstationen könnten durch aufwändigere Stationen ersetzt oder mittels Firmware-Updates mit neuen Funktionen ausgestattet werden, wobei diese Stationen jedoch keine automatischen Firmware-Updates über den TKS-Bus zulassen. Es wäre besonders aufwändig und kostenintensiv, die Stationen auszutauschen oder manuell mit neuer Firmware auszustatten.

Der Erfindung liegt daher die Aufgabe zugrunde, eine Lösung zu schaffen, die es ermöglicht, eine Videomailboxeinheit in ein bestehendes herkömmliches Türkommunikationssystem mit geringem Aufwand und geringen Kosten zu integrieren.

Die Aufgabe wird erfindungsgemäß durch ein Verfahren zum Betreiben einer Videomailbox in einem Türkommunikationssystem, umfassend mindestens eine Türstation, eine Wohnungsstation und eine Videomailboxeinheit gelöst, wobei die Videomailboxeinheit als virtuelle Wohnungsstation für Kommunikation mit der Wohnungsstation im Türkommunikationssystem agiert, und die Wohnungsstation die Videomailboxeinheit über eine Bus-Signalisierung, insbesondere eine Internruf-Signalisierung oder eine Schalt-Signalisierung, ansteuert, woraufhin die Videomailboxeinheit als virtuelle Türstation mit Videofunktion im Türkommunikationssystem agiert und über eine Bus-Signalisierung, insbesondere über eine Türruf-Signalisierung, die Wohnungsstation zurückruft. Dabei wird eine A/V-Verbindung zwischen Videomailboxeinheit und Wohnungsstation aufgebaut, wonach die Videomailboxeinheit die gespeicherte A/V-Nachricht über die A/V-Verbindung überträgt, und die Wohnungsstation die A/V-Nachricht mittels eines Displays und eines Lautsprechers ausgibt, und am Ende der A/V-Nachricht die Videomailboxeinheit die A/V-Verbindung unterbricht.

Dies hat den Vorteil, dass sich die Videomailboxeinheit für das Abspielen einer A/V-Nachricht in das bestehende Türkommunikationssystem integriert, ohne irgendwelche Änderungen der Funktionsweise der Wohnungsstationen zu benötigen. Die Videomailboxeinheit simuliert in diesem Fall in Bezug auf eine andere Wohnungsstation zunächst das Verhalten einer unveränderten Wohnungsstation, indem sie die vorhandene Funktion der internen Kommunikation, insbesondere eine Internruf-Signalisierung oder eine Schalt-Signalisierung, zwischen Wohnungsstationen nutzt und einen derartige Ansteuerung einer Wohnungsstation als Anforderung für die A/V-Nachrichten interpretiert. Da die Kommunikation zwischen zwei Wohnungsstationen jedoch nicht für eine A/V-Verbindung, sondern nur für Audio-Verbindungen ausgelegt ist, wird zum Beispiel der Intern-Ruf nicht angenommen und stattdessen von der Videomailboxeinrichtung eine Verbindung als Türstation zur Wohnungsstation aufgebaut. In diesem Fall ist die Verbindung zwischen Videomailboxeinheit und Wohnungsstation identisch zu der Verbindung zwischen einer herkömmlichen Türstation und einer herkömmlichen Wohnungsstation. Da eine derartige Verbindung bei einem herkömmlichen Türkommunikationssystem als A/V-Verbindung ausgelegt ist, können die Videosignale auf dem Display der Wohnungsstation wiedergegeben werden. Zur komfortablen Nutzung kann im Rahmen der Inbetriebnahme zum Beispiel mindestens eine Internruftaste einer Wohnungsstation ausgewählt werden, die die Videomailbox-Wiedergabe initiiert.

In einer weiteren Ausführungsform agiert die Videomailboxeinheit als virtuelle Wohnungsstation für Kommunikation mit der Türstation im Türkommunikationssystem. Dabei ruft die Türstation die Videomailboxeinheit über eine Türruf-Signalisierung an, wobei eine A/V-Verbindung zwischen Türstation und Videomailboxeinheit aufgebaut wird, und die Videomailboxeinheit zunächst eine gespeicherte Audio-Ansage an die Türstation über das Türkommunikationssystem überträgt, die mittels eines Lautsprechers in der Türstation ausgegeben wird. Daraufhin empfängt die Videomailboxeinheit eine A/V-Nachricht mittels eines Mikrofons und einer Videokamera der Türstation über die A/V-Verbindung und speichert sie in einem Nachrichtenspeicher, bis die A/V-Verbindung von der Türstation unterbrochen wird oder die Videomailboxeinheit die A/V-Verbindung nach Ablauf einer vordefinierten Zeit unterbricht. Dies hat den Vorteil, dass zum Beispiel ein nicht belegtes Bedienelement der Türstation zum direkten Anruf der Videomailboxeinheit verwendet werden kann und die Verbindung mit der Videomailbox somit besonders schnell und einfach aufgebaut werden kann.

In einer weiteren Ausführungsform agiert die Videomailboxeinheit als virtuelle Wohnungsstation für Kommunikation mit der Türstation im Türkommunikationssystem. Dabei hört die Videomailboxeinheit eine Türruf-Signalisierung einer Türstation an die Wohnungsstation in dem Türkommunikationssystem mit. Nach Ablauf einer vordefinierten Zeit agiert die Videomailboxeinheit als die angerufene Wohnungsstation in dem Türkommunikationssystem und beantwortet die Türruf-Signalisierung der Türstation anstelle der Wohnungsstation. Dabei wird eine A/V-Verbindung zwischen Türstation und Videomailboxeinheit aufgebaut, und die Videomailboxeinheit überträgt zunächst eine gespeicherte Audio-Ansage an die Türstation über das Türkommunikationssystem, die mittels eines Lautsprechers in der Türstation ausgegeben wird. Daraufhin empfängt die Videomailboxeinheit eine A/V-Nachricht mittels eines Mikrofons und einer Videokamera der Türstation über die A/V-Verbindung und speichert sie in einem Nachrichtenspeicher, bis die A/V-Verbindung von der Türstation unterbrochen wird oder die Videomailboxeinheit die A/V-Verbindung nach Ablauf einer vordefinierten Zeit unterbricht. Dies hat den Vorteil, dass sich für die Aufnahme und Speicherung einer A/V-Nachricht die Videomailboxeinheit in das bestehende Türkommunikationssystem integriert, ohne irgendwelche Änderungen der Funktionsweise der Türstationen und/oder der Wohnungsstationen zu benötigen. Die Videomailboxeinheit simuliert in diesem Fall in Bezug auf die Türstation das Verhalten einer unveränderten Wohnungsstation, so dass die Verbindung zwischen Türstation und Videomailboxeinheit identisch zu der Verbindung mit einer herkömmlichen Wohnungsstation ist. Es erfordert in diesem Fall auch keine spezielle Programmierung der Bedienelemente der Türstation, um die Videomailboxeinheit anzurufen.

Es können auch mehrere Videomailboxen im System vorhanden sein. Dies kann durch eine Videomailboxeinheit, die gleichzeitig mehrere Videomailboxen als virtuelle Videomailboxeinheiten zur Verfügung stellt, oder durch mehrere physikalische Videomailboxeinheiten verwirklicht werden. In diesem Fall sind zum Beispiel mehrere Internruftasten der Wohnungsstationen und/oder mehrere Ruftasten der Türstation derart konfiguriert, dass sie eine A/V-Verbindung zu unterschiedlichen Videomailboxeinheiten aufbauen. Dabei weist jede Videomailboxeinheit einen separaten Nachrichtenspeicher auf. Somit besteht die Möglichkeit, A/V-Nachrichten für verschiedene Empfänger, insbesondere verschiedene Wohnungen, separat aufzunehmen bzw. separat über die Wohnungsstationen abzurufen.

Im Rahmen der Inbetriebnahme der Videomailboxeinheit werden notwendige Konfigurationsdaten, die in den Wohnungsstationen, Türstationen und/oder der Videomailboxeinheit vorliegen müssen, wie zum Beispiel die Adressierung der Wohnungstationen, der Türstation sowie deren Bedienelementen und der Videomailboxeinheit, in die einzelnen Geräte programmiert. Dabei wird zum Beispiel einer Eingabetaste der Türstation eine Videomailboxeinheit zugewiesen und/oder einer Internruftaste einer Wohnungsstation eine Videomailboxeinheit zugewiesen, und die Videomailboxeinheit speichert die Adressen der Türstationen sowie deren Bedienelementen und Wohnungsstationen, die einer bestimmten Videomailbox zugewiesen sind. Die Videomailboxeinheit kann über ein IP-Internet-Interface konfiguriert und gesteuert werden. Dies kann entweder über ein separates Konfigurationstool auf einem PC oder mittels eines in der Videomailboxeinheit integrierten Web-Servers ermöglicht werden. So können zum Beispiel die vordefinierten Zeitintervalle konfiguriert werden und die nötigen Parameter für die E-Mail-Weiterleitung eingestellt werden.

In einer vorteilhaften Ausführungsform der Erfindung überträgt die Videomailboxeinheit, wenn mehrere A/V-Nachrichten gespeichert sind, zunächst nur neue, noch nicht auf einer Wohnungsstation ausgegebene A/V-Nachrichten in zeitlicher Reihenfolge der Speicherung, beginnend mit der neuesten A/V-Nachricht, und unterbricht am Ende der letzten neuen A/V-Nachricht die A/V-Verbindung, wobei die Videomailboxeinheit, wenn keine neuen A/V-Nachrichten vorhanden sind, alle gespeicherten A/V-Nachrichten in zeitlicher Reihenfolge der Speicherung, beginnend mit der neuesten A/V-Nachricht überträgt, und am Ende der letzten A/V-Nachricht die A/V-Verbindung unterbricht. Dies hat den Vorteil, dass der Benutzer mehrere A/V-Nachrichten auf einmal abrufen kann und neue A/V-Nachrichten gegenüber den alten A/V-Nachrichten priorisiert und von Ihnen unterschieden werden können.

In einer bevorzugten Ausführungsform löscht die Videomailboxeinheit bereits einmal übertragene A/V-Nachrichten nach einem vordefinierten Zeitintervall automatisch, wenn der Nachrichtenspeicher der Videomailboxeinheit einen vordefinierten Füllstand erreicht. Dies verhindert ein Volllaufen des Nachrichtenspeichers, wobei die ältesten A/V-Nachrichten, die in der Regel weniger wichtig sind, zuerst gelöscht werden.

In einer Ausführungsform der Erfindung werden Audio-Verbindungen anstelle von oder parallel zu A/V-Verbindungen aufgebaut und Audio-Nachrichten in dem Nachrichtenspeicher gespeichert. Dies hat den Vorteil, dass auch Türstationen und/oder Wohnungsstationen ohne Video-Funktionalität mit Audio-Nachrichten verwendet werden können.

In einer Ausführungsform der Erfindung leitet die Videomailboxeinheit gespeicherte A/V-Nachrichten über das IP-Internet-Interface per E-Mail an einen vordefinierten E-Mail-Empfänger als digitale A/V-Datei weiter. Dies hat den Vorteil, dass A/V-Videonachrichten auch unabhängig vom Türkommunikationssystem empfangen werden können. Diese Funktionalität ist auch unabhängig von den anderen Ausführungsformen in einer beliebigen Videomailboxeinheit möglich. Zudem können die A/V-Nachrichten der Videomailboxeinheit auch über Softwareprogramme, die über die IP-Internet-Schnittstelle kommunizieren, komfortabel bedient, abgehört und gelöscht werden.

Die Videomailboxeinheit kann sowohl als eigenständige Station im Türkommunikationssystem ausgebildet sein, als auch als Modul in einem IP-Türkommunikationssystem-Gateway integriert sein.

Die Erfindung ist nicht auf die dargestellten und beschriebenen Ausführungsbeispiele beschränkt, sondern umfasst auch alle im Sinne der Erfindung gleichwirkenden Ausführungen. Ferner ist die Erfindung bislang auch noch nicht auf die in dem jeweiligen unabhängigen Anspruch definierte Merkmalskombination beschränkt, sondern kann auch durch jede beliebige andere Kombination von bestimmten Merkmalen aller insgesamt offenbarten Einzelmerkmale definiert sein. Dies bedeutet, dass grundsätzlich praktisch jedes Einzelmerkmal des jeweiligen unabhängigen Anspruchs weggelassen bzw. durch mindestens ein an anderer Stelle der Anmeldung offenbartes Einzelmerkmal ersetzt werden kann. Insofern sind die Ansprüche lediglich als ein erster Formulierungsversuch für die jeweilige Erfindung zu verstehen.

## Patentansprüche

1. Verfahren zum Betreiben einer Videomailbox in einem Türkommunikationssystem, umfassend mindestens eine Türstation, eine Wohnungsstation und eine Videomailboxeinheit, wobei die Videomailboxeinheit als virtuelle Wohnungsstation für Kommunikation mit der Wohnungsstation im Türkommunikationssystem agiert, und die Wohnungsstation die Videomailboxeinheit über eine Bus-Signalisierung in der Form einer Internruf-Signalisierung oder Schalt-Signalisierung des Türkommunikationssystems ansteuert, woraufhin die Videomailboxeinheit als virtuelle Türstation mit Videofunktion im Türkommunikationssystem agiert und über eine Türruf-Signalisierung die Wohnungsstation zurückruft, woraufhin eine A/V-Verbindung zwischen Videomailboxeinheit und Wohnungsstation aufgebaut wird, und wonach die Videomailboxeinheit die gespeicherte A/V-Nachricht über die A/V-Verbindung überträgt, und die Wohnungsstation die A/V-Nachricht mittels eines Displays und eines Lautsprechers ausgibt, und am Ende der A/V-Nachricht die Videomailboxeinheit die A/V-Verbindung unterbricht.

2. Verfahren nach Anspruch 1,
**dadurch gekennzeichnet, dass**
die Videomailboxeinheit als virtuelle Wohnungsstation für Kommunikation mit der Türstation im Türkommunikationssystem agiert und die Türstation die Videomailboxeinheit über eine Türruf-Signalisierung anruft, wobei eine A/V-Verbindung zwischen Türstation und Videomailboxeinheit aufgebaut wird, und die Videomailboxeinheit zunächst eine gespeicherte Audio-Ansage an die Türstation über das Türkommunikationssystem überträgt, die mittels eines Lautsprechers in der Türstation ausgegeben wird, und die Videomailboxeinheit daraufhin eine A/V-Nachricht mittels eines Mikrofons und einer Videokamera der Türstation über die A/V-Verbindung empfängt und in einem Nachrichtenspeicher speichert, bis die A/V-Verbindung von der Türstation unterbrochen wird oder die Videomailboxeinheit die A/V-Verbindung nach Ablauf einer vordefinierten Zeit unterbricht.

3. Verfahren nach Anspruch 1 oder 2,
**dadurch gekennzeichnet, dass**
dass die Videomailboxeinheit als virtuelle Wohnungsstation für Kommunikation mit der Türstation im Türkommunikationssystem agiert, und die Videomailboxeinheit eine Türruf-Signalisierung einer Türstation an die Wohnungsstation in dem Türkommunikationssystem mithört, und die Videomailboxeinheit nach Ablauf einer vordefinierten Zeit als die angerufene Wohnungsstation in dem Türkommunikationssystem agiert, und die Videomailboxeinheit die Türruf-Signalisierung der Türstation anstelle der Wohnungsstation beantwortet, wobei eine A/V-Verbindung zwischen Türstation und Videomailboxeinheit aufgebaut wird, und die Videomailboxeinheit zunächst eine gespeicherte Audio-Ansage an die Türstation über das Türkommunikationssystem überträgt, die mittels eines Lautsprechers in der Türstation ausgegeben wird, und die Videomailboxeinheit daraufhin eine A/V-Nachricht mittels eines Mikrofons und einer Videokamera der Türstation über die A/V-Verbindung empfängt und in einem Nachrichtenspeicher speichert, bis die A/V-Verbindung von der Türstation unterbrochen wird oder die Videomailboxeinheit die A/V-Verbindung nach Ablauf einer vordefinierten Zeit unterbricht.

4. Verfahren nach einem der Ansprüche 1 bis 3,
**dadurch gekennzeichnet, dass**
mehrere Videomailboxen im System vorhanden sind, und die anzurufende Videomailboxeinheit an der Türstation und an der Wohnungsstation auswählbar ist, und jede Videomailboxeinheit einen separaten Nachrichtenspeicher aufweist.

5. Verfahren nach einem der Ansprüche 1 bis 4,
**dadurch gekennzeichnet, dass**
die Videomailboxeinheit, wenn mehrere A/V-Nachrichten gespeichert sind, zunächst nur neue, noch nicht auf einer Wohnungsstation ausgegebene A/V-Nachrichten in zeitlicher Reihenfolge der Speicherung, beginnend mit der neuesten A/V-Nachricht überträgt, und am Ende der letzten neuen A/V-Nachricht die A/V-Verbindung unterbricht, wobei die Videomailboxeinheit, wenn keine neuen A/V-Nachrichten vorhanden sind, alle gespeicherten A/V-Nachrichten in zeitlicher Reihenfolge der Speicherung, beginnend mit der neuesten A/V-Nachricht überträgt, und am Ende der letzten A/V-Nachricht die A/V-Verbindung unterbricht.

6. Verfahren nach einem der Ansprüche 1 bis 5,
**dadurch gekennzeichnet, dass**
die Videomailboxeinheit bereits einmal übertragene A/V-Nachrichten nach einem vordefinierten Zeitintervall automatisch löscht, wenn der Nachrichtenspeicher der Videomailboxeinheit einen vordefinierten Füllstand erreicht.

7. Verfahren insbesondere nach einem der Ansprüche 1 bis 6,
**dadurch gekennzeichnet, dass**
die Videomailboxeinheit gespeicherte A/V-Nachrichten per E-Mail an einen vordefinierten E-Mail-Empfänger als digitale A/V-Datei weiterleitet.

8. Videomailboxeinheit für ein Türkommunikationssystem zur Durchführung des Verfahrens nach einem der Ansprüche 1 bis 7,
**dadurch gekennzeichnet, dass**
die Videomailboxeinheit mittels einer Internruf-Signalisierung oder einer Schalt-Signalisierung von einer Wohnungsstation ansteuerbar ist, wobei die Videomailboxeinheit mittels einer Türruf-Signalisierung zurückruft, um eine A/V-Verbindung zwischen Videomailboxeinheit und Wohnungsstation aufzubauen, und die Videomailboxeinheit mittels einer Türruf-Signalisierung von einer Türstation anrufbar ist, um eine A/V-Verbindung zwischen Videomailboxeinheit und Türstation aufzubauen.

9. Türkommunikationssystem mit einer Videomailboxeinheit nach Anspruch 8.

## Claims

1. Method for operating a video mailbox in a door communication system comprising at least a door station, a residence station and a video mailbox unit, wherein the video mailbox unit acts as a virtual residence station for communicating with the residence station in the door communication system, and the residence station controls the video mailbox unit by means of bus signalling in the form of internal call signalling or switching signalling of the door communication system, whereupon the video mailbox unit acts as a virtual door station with a video function in the door communication system and calls back the residence station by means of door call signalling, whereupon an AV connection is set up between the video mailbox unit and the residence station, and after which the video mailbox unit transmits the stored AV message via the AV connection, and the residence station outputs the AV message using a display and a loudspeaker, and the video mailbox unit interrupts the AV connection at the end of the AV message.

2. Method according to Claim 1,
**characterized in that** the video mailbox unit acts as a virtual residence station for communicating with the door station in the door communication system and the door station calls the video mailbox unit using door call signalling, wherein an AV connection is set up between the door station and the video mailbox unit, and the video mailbox unit first of all transmits a stored audio announcement to the door station via the door communication system, which announcement is output using a loudspeaker in the door station, and the video mailbox unit then receives an AV message using a microphone and a video camera of the door station via the AV connection and stores it in a message store until the AV connection is interrupted by the door station or the video mailbox unit interrupts the AV connection after expiry of a predefined time.

3. Method according to Claim 1 or 2,
**characterized in that** the video mailbox unit acts as a virtual residence station for communicating with the door station in the door communication system, and the video mailbox unit listens in on door call signalling from a door station to the residence station in the door communication system, and the video mailbox unit acts as the called residence station in the door communication system after expiry of a predefined time, and the video mailbox unit responds to the door call signalling from the door station instead of the residence station, wherein an AV connection is set up between the door station and the video mailbox unit, and the video mailbox unit first of all transmits a stored audio announcement to the door station via the door communication system, which announcement is output using a loudspeaker in the door station, and the video mailbox unit then receives an AV message using a microphone and a video camera of the door station via the AV connection and stores it in a message store until the AV connection is interrupted by the door station or the video mailbox unit interrupts the AV connection after expiry of a predefined time.

4. Method according to one of Claims 1 to 3,
**characterized in that** a plurality of video mailboxes are provided in the system, and the video mailbox unit to be called can be selected at the door station and at the residence station, and each video mailbox unit has a separate message store.

5. Method according to one of Claims 1 to 4,
**characterized in that** if a plurality of AV messages are stored, the video mailbox unit first of all transmits only new AV messages, which have not yet been output on a residence station, in chronological order of storage beginning with the newest AV message and interrupts the AV connection at the end of the last new AV message, wherein the video mailbox unit, if there are no new AV messages, transmits all stored AV messages in chronological order of storage starting with the newest AV message and interrupts the AV connection at the end of the last AV message.

6. Method according to one of Claims 1 to 5,
**characterized in that** the video mailbox unit automatically deletes AV messages which have already been transmitted once after a predefined interval of time when the message store of the video mailbox unit reaches a predefined filling level.

7. Method, in particular according to one of Claims 1 to 6,
**characterized in that** the video mailbox unit forwards stored AV messages by email to a predefined email recipient in the form of a digital AV file.

8. Video mailbox unit for a door communication system for carrying out the method according to one of Claims 1 to 7,
**characterized in that** the video mailbox unit can be controlled by a residence station by means of internal call signalling or switching signalling, wherein the video mailbox unit calls back by means of door call signalling in order to set up an AV connection between the video mailbox unit and the residence station, and the video mailbox unit can be called by a door station by means of door call signalling in order to set up an AV connection between the video mailbox unit and the door station.

9. Door communication system having a video mailbox unit according to Claim 8.

## Revendications

1. Procédé pour faire fonctionner une boîte aux lettres électronique vidéo dans un système de communication de porte, comprenant au moins une station de porte, une station d'appartement et une unité de boîte aux lettres électronique vidéo, l'unité de boîte aux lettres électronique vidéo agissant en tant que station d'appartement virtuelle pour la communication avec la station d'appartement dans le système de communication de porte, et la station d'appartement commandant l'unité de boîte aux lettres électronique vidéo via une signalisation de bus sous la forme d'une signalisation d'appel interne ou d'une signalisation de commutation du système de communication de porte, après quoi l'unité de boîte aux lettres électronique vidéo agit en tant que station de porte virtuelle avec fonction vidéo dans le système de communication de porte et rappelle la station d'appartement via une signalisation d'appel de porte, après quoi une connexion A/V est établie entre l'unité de boîte aux lettres électronique vidéo et la station d'appartement, et après quoi l'unité de boîte aux lettres électronique vidéo transmet le message A/V enregistré via la connexion A/V, et la station d'appartement fait sortir le message A/V au moyen d'un afficheur et d'un haut-parleur, et à la fin du message A/V, l'unité de boîte aux lettres électronique vidéo interrompt la connexion A/V.

2. Procédé selon la revendication 1,
**caractérisé en ce que** l'unité de boîte aux lettres électronique vidéo agit en tant que station d'appartement virtuelle pour la communication avec la station de porte dans le système de communication de porte, et **en ce que** la station de porte appelle l'unité de boîte aux lettres électronique vidéo via une signalisation d'appel de porte, une connexion A/V étant établie entre la station de porte et l'unité de boîte aux lettres électronique vidéo, et l'unité de boîte aux lettres électronique vidéo transmettant tout d'abord une annonce vocale audio enregistrée à l'attention de la station de porte via le système de communication de porte, laquelle annonce est émise au moyen d'un haut-parleur dans la station de porte, et l'unité de boîte aux lettres électronique vidéo réceptionnant suite à cela un message A/V au moyen d'un microphone et d'une caméra vidéo de la station de porte via la connexion A/V et l'enregistrant dans une mémoire de messages jusqu'à ce que la connexion A/V soit interrompue par la station de porte ou que l'unité de boîte aux lettres électronique vidéo interrompe la connexion A/V après l'écoulement d'une durée prédéfinie.

3. Procédé selon la revendication 1 ou 2,
**caractérisé en ce que** l'unité de boîte aux lettres électronique vidéo agit en tant que station d'appartement virtuelle pour la communication avec la station de porte dans le système de communication de porte, et **en ce que** l'unité de boîte aux lettres électronique vidéo est à l'écoute d'une signalisation d'appel de porte d'une station de porte à l'attention de la station d'appartement dans le système de communication de porte, et après l'écoulement d'une durée prédéterminée, l'unité de boîte aux lettres électronique vidéo agissant en tant que la station d'appartement appelée dans le système de communication de porte, et la boîte aux lettres électronique vidéo répondant à la signalisation d'appel de porte de la station de porte à la place de la station d'appartement, une connexion A/V étant établie entre la station de porte et la boîte aux lettres électronique vidéo, et la boîte aux lettres électronique vidéo transmettant tout d'abord une annonce vocale audio enregistrée à l'attention de la station de porte via le système de communication de porte, laquelle annonce est émise au moyen d'un haut-parleur dans la station de porte, et l'unité de boîte aux lettres électronique vidéo réceptionnant suite à cela un message A/V au moyen d'un microphone et d'une caméra vidéo de la station de porte via la connexion A/V et l'enregistrant dans une mémoire de messages jusqu'à ce que la connexion A/V soit interrompue par la station de porte ou que l'unité de boîte aux lettres électronique vidéo interrompe la connexion A/V après l'écoulement d'une durée prédéfinie.

4. Procédé selon l'une des revendications 1 à 3,
**caractérisé en ce que** il y a plusieurs boîtes aux lettres électroniques vidéo dans le système, et l'unité de boîte aux lettres électronique vidéo à appeler pouvant être sélectionnée au niveau de la station de porte et de la station d'appartement, et chaque unité de boîte aux lettres électronique vidéo présentant une mémoire de messages distincte.

5. Procédé selon l'une des revendications 1 à 4,
**caractérisé en ce que** lorsque plusieurs messages A/V sont enregistrés, l'unité de boîte aux lettres électronique vidéo transmet tout d'abord seulement des messages A/V nouveaux, n'ayant pas encore été émis sur une station d'appartement, par ordre chronologique de l'enregistrement en commençant avec le message A/V le plus nouveau, et interrompt la connexion A/V à la fin du dernier nouveau message A/V, lorsqu'il n'y a pas de nouveaux messages A/V, l'unité de boîte aux lettre électronique vidéo transmettant tous les messages A/V enregistrés par ordre chronologique d'enregistrement en commençant avec le message A/V le plus nouveau, et interrompant la connexion A/V à la fin du dernier message A/V

6. Procédé selon l'une des revendications 1 à 5,
**caractérisé en ce que** l'unité de boîte aux lettres électronique vidéo supprime automatiquement, après un intervalle de temps prédéterminé, des messages A/V ayant déjà été transmis une fois si la mémoire de messages de l'unité de boîte aux lettres électronique vidéo atteint un niveau de remplissage prédéterminé.

7. Procédé, en particulier selon l'une des revendications 1 à 6,
**caractérisé en ce que** l'unité de boîte aux lettres électronique vidéo retransmet des messages A/V enregistrés via messagerie électronique à l'attention d'un destinataire de message électronique prédéfini en tant que fichier A/V numérique.

8. Unité de boîte aux lettres électronique vidéo pour un système de communication de porte pour la mise en oeuvre du procédé selon l'une des revendications 1 à 7,
**caractérisée en ce que** l'unité de boîte aux lettres électronique vidéo peut être commandée au moyen d'une signalisation d'appel interne ou d'une signalisation de commutation d'une station d'appartement, l'unité de boîte aux lettres électronique vidéo effectuant un rappel au moyen d'une signalisation d'appel de porte afin d'établir une connexion A/V entre l'unité de boîte aux lettres électronique vidéo et la station d'appartement, et l'unité de boîte aux lettres électronique vidéo pouvant être appelée par une station de porte au moyen d'une signalisation d'appel de porte pour établir une connexion A/V entre l'unité de boîte aux lettres électronique vidéo et la station de porte.

9. Système de communication de porte avec une unité de boîte aux lettres électronique vidéo selon la revendication 8.
